# EUROPEAN PATENT APPLICATION

(11) **EP 2 583 778 A1**
(43) Date of publication of application: **24.04.2013**
(21) Application number: 11185991.4
(22) Date of filing: 20.10.2011
(51) Int. Cl.: B23D 59/00, B28D 5/04

(54) **Method and apparatus for measuring wire-web bow in a wire saw**

(71) Applicant: Applied Materials Switzerland Sàrl, 1033 Cheseaux-sur-Lausanne (CH)
(72) Inventor: Nasch, Philippe, 1052 Le Mont-sur-Lausanne (CH)
(74) Representative: Zimmermann & Partner

(57) **Abstract**

A wire saw 1 for sawing a workpiece 50 with a wire 10 is described. The wire saw includes at least one sensor 80 configured to detect a position of a wire portion 210 within the workpiece 50 during sawing of the workpiece50.

## Description

### FIELD OF THE INVENTION

Embodiments of the present invention relate to a wire saw for sawing a workpiece, comprising at least one sensor configured to detect a wire portion within the workpiece, and a method of detecting a wire portion within a workpiece during cutting of the workpiece with a wire saw.

### BACKGROUND OF THE INVENTION

Wire saws are used to cut workpieces, for example silicon workpieces are cut using wire saws for cropping, squaring, and wafering. Wire saws are also used for cutting other materials.

Different types of wire may be used in wire saws, for example those used in combination with silicon carbide particles in a slurry, and diamond wire often used in combination with a coolant. Generally, a hard material such as silicon carbide or diamond abrade the workpiece to make the cut.

During cutting, the wire is moved rapidly along its length (horizontally), and the workpiece is moved comparatively slowly by a workpiece supply plate in a cutting direction substantially perpendicular (vertically) to the direction of fast wire motion. A vertical force of the wire on the workpiece is thus applied along the cutting direction, and the reactive force of the workpiece on the wire causes the wire to be deformed or bowed in the direction opposite to the cutting direction. Based on geometric considerations including an estimation of the bow, an estimation of the vertical force can be made, commonly taken as twice the vertical component of the wire tension.

Regardless of the manner of estimation of the vertical force and/or bow, the vertical force is useful in being able to inform the adjustment of table speed and cutting speed, thereby maximizing throughput, and minimizing wear and breakage of the wire(s).

An additional problem with wire sawing is the presence of inclusions within the workpiece which may require an adjustment of table speed and/or cutting speed to maximize throughput, and/or prevent damage and breakage of the wire. Inclusions may further affect the shape of the wire within the ingot, having an impact on the magnitude of the bow and the vertical force. It is desirable to have a means of detecting such inclusions and also of adjusting table speed to maximize throughput, and/or prevent wire damage and breakage.

### SUMMARY

According to an embodiment, a wire saw for sawing a workpiece is provided, the wire saw comprising at least one sensor to detect a wire portion within a workpiece, while sawing the workpiece.

According to a further embodiment, a process of controlling a wire saw is provided, comprising detecting a position of a wire portion within a workpiece during sawing of the workpiece.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:

Fig. 1 shows a typical wire saw;

Fig. 2 shows a wire saw comprising at least one sensor detecting a wire portion from within a workpiece, according to embodiments described herein;

Fig. 3 shows a wire saw comprising at least one sensor within a workpiece holder, according to embodiments described herein;

Fig. 3B shows a wire saw comprising at least one sensor within a workpiece holder, according to embodiments described herein;

Fig. 4 shows a wire saw comprising an ultrasonic transducer, according to embodiments described herein;

Fig. 5 shows a wire saw comprising at least one IR sensor, according to embodiments described herein;

Fig. 6 shows a wire saw comprising an array of sensors, according to embodiments described herein;

Fig. 7 shows relative positions of sensors and wire(s) of a wire saw, according to embodiments described herein;

Fig. 8 shows relative positions of sensors and wire(s) of a wire saw, according to embodiments described herein;

Fig. 9 shows a flow diagram of a wire controlling process or wire operating process, according to embodiments described herein;

Fig. 10 shows a flow diagram of a wire controlling process or wire operating process, according to embodiments described herein;

Fig. 11 shows a flow diagram of a wire controlling process or wire operating process, according to embodiments described herein.

### DETAILED DESCRIPTION OF THE INVENTION

Herein, wire saw, wire saw device, wire sawing device, and wire cutting device are used interchangeably. Herein, workpiece support plate and workpiece supply plate are used interchangeably. Herein, the terms sawing and cutting are used interchangeably; and wafer-cutting wire saw and waferer are used interchangeably. Herein, diameters of wires refer to the core diameters. Herein, a workpiece may comprise one or more separate pieces, for example a plurality of semiconductor pieces or ingots. Herein, the wire saw can cut using a single wire, multiple wires, one or more rows of one or more wires, or one or more webs of one or more wires; wire may refer to multiple wires. Herein, workpiece supply plate, workpiece support plate, supply plate, and support plate are used interchangeably. Herein a sensor may also perform functions in addition to sensing, for example an ultrasonic sensor may be an ultrasonic transducer and vice versa, so that an ultrasonic sensor may both generate and detect ultrasonic pulses and waves. Herein, wire portion within the workpiece and wire within the workpiece are used interechangeably, and the position or location thereof is of the wire portion located within the workpiece especially but not exclusively during cutting. Herein, the phrases, "in relation to," "in reference to," and "relative to" are used interchangeably. Herein, the term ultrasonic may refer both to ultrasonic and acoustic frequencies or megasound frequencies. According to embodiments described herein, the frequencies can be also below or above ultrasonic frequencies.

Reference will now be made in detail to the various embodiments of the invention, one or more examples of which are illustrated in the figures. Each example is provided by way of explanation and is not meant as a limitation. Further, features illustrated or described as part of one embodiment can be used on or in conjunction with other embodiments to yield yet a further embodiment. It is intended that the description includes such modifications and variations.

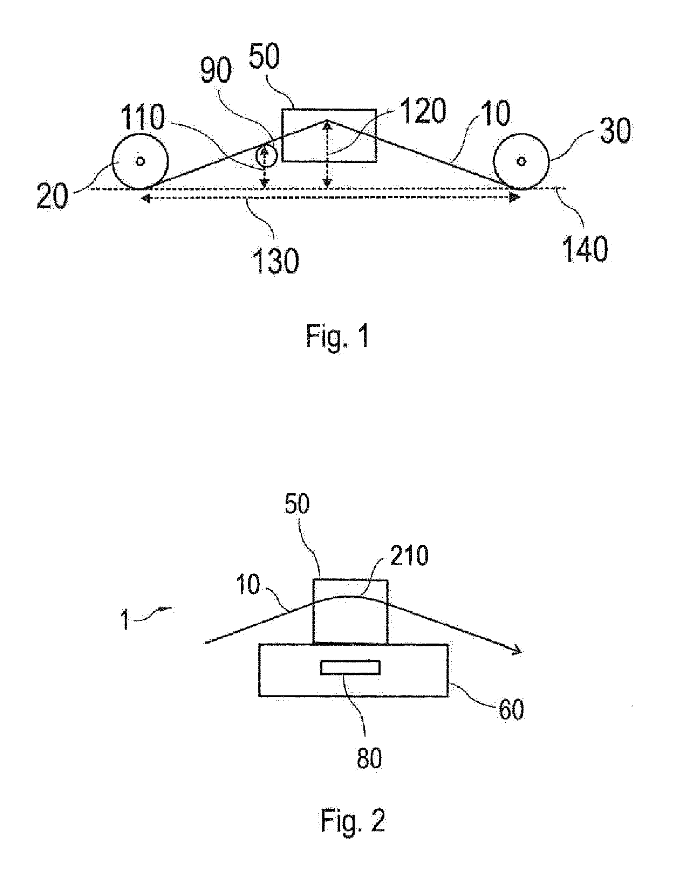

Fig. 1 shows a typical wire saw, which comprises a wire 10 which is guided by a first pulley 20 and by a second pulley 30. During cutting, the wire moves substantially along its length relatively rapidly in comparison to the vertical motion along the cutting direction. The wire motion can alternatively be in a reciprocating manner, in which the motion of the wire along its length is periodically reversed direction. The wire or an edge of the wire is contacted to a workpiece 50 to cut the workpiece, and the motion in the cutting direction, substantially perpendicular to the fast motion of the wire, is comparatively slow. Alternatively or additionally, the workpiece is contacted to the wire to cut the workpiece. According to different implementations, the wire or wires forming a wire web can be moved relative to the workpiece, the workpiece can be moved relative to the wire or wire web, or the wire and the workpiece can both be moved relative to each other.

Typically, the bow is estimated using a sensor that detects a portion of the wire that is outside of the workpiece, although the sensor is blind to the position of the wire within the workpiece. One problem associated with wire saws and wire sawing is how to determine bow and the vertical force within the workpiece.

A sensor 90 may be implemented to detect the deformation 110, shown by the leftmost doubleheaded arrow in Fig. 1, of the wire at a position outside of the workpiece. The estimated bow 120 within the workpiece may be extrapolated based on the assumption that the deformation of the wire from the horizontal 140 is linear to a vertex made by the wire within the workpiece midway between the two pulleys 20, 30. The horizontal 140 is defined by an imaginary line tangent to two wire guides such as two pulleys 20, 30 that guide the wire on either side of the workpiece 50. The tangent line intersects the pulleys 20, 30 at the point where the wire leaves the pulleys. The vertical force, *Fᵥ,* is typically calculated from geometric considerations (which include the estimated or extrapolated bow 120 and the wire guide distance 130) and the wire tension, such that *Fᵥ = (B*/*d)x4T*; with T= tension, B = estimated or extrapolated bow 120, and d = wire guide distance 130. Furthermore, the expression for Fᵥ above is derived from assumptions such as that the bow is small in comparison to the wire guide distance, which is usually the case. A typical ratio of B/d is about 1/100, with for example the bow (B) being about 6 millimeters and the wire guide distance (d) being about 600 millimeters. Thus, an error of only half a millimeter in the estimated or extrapolated bow would typically result in an error in the vertical force of nearly 10%. It is desirable, therefore, to minimize the error in the determination of the bow, which can be a significant source of error of the vertical force estimation.

In addition to the vertical force, horizontal forces for example friction also exist, that may be accessed through the wire-guide motor power.

Knowledge of forces, for example the vertical and/or horizontal forces, during cutting allows control of the slicing process, for example by the means of a feedback control loop. It is desirable to have an in-situ real-time wire web bow measurement, for example to provide at least one parameter, for example the vertical force or bow for a feedback control loop.

Fig. 2 shows a wire saw 1 according to embodiments described herein. While a workpiece 50 is cut, for example during squaring or wafering of a silicon ingot, at least one sensor 80 detects a wire portion 210 located within the workpiece. By measuring the position of the wire portion 210 within the workpiece, the bow and/or vertical force can be determined during the cutting process. Furthermore, the table speed, table position, and/or cutting speed can be adjusted based on at least partially the bow or vertical force.

Typically, structured wire or diamond wire is utilized. The wire may be monofilament steel wire. According to some embodiments, the wire is from approximately 80 to 350 micrometer, for example 120 micrometer steel gauge wire. According to some embodiments, structured wire is a crimped wire, wherein, for example, saw wire being made of a metallic wire of a diameter d and being provided with a plurality of crimps, wherein said crimps are arranged in at least two different planes, such that, when measured, between measuring rods of a micrometer, over a length comprising crimps in at least two different planes, a circumscribed enveloping diameter D of said crimped saw wire is between 1.05 and 1.50 times said diameter d. Diamond wire is a wire with a coating, wherein diamond particles are embedded in the coating. Typically, the wire diameters referred to herein describe the core diameter, i.e. the diameter of the core without coating and/or embedded particles or the diameter of the saw wire irrespective of the crimps, i.e. the envelope.

Movement of the workpiece is performed by a movable workpiece support plate or workpiece supply plate 60. The wire 10, the workpiece supply plate 60, and both the wire and workpiece supply plate can be movable. For example, wire guides such as movable pulleys may move the wire 10.

Embodiments of the present invention refer to cutting of workpieces, where sensors that detect from within the workpiece have not been utilized previously. Thereby, the embodiments detect a wire portion 210 from within the workpiece, using at least one sensor 80.

In an embodiment, the bow and/or shape of the wire portion 210 within the workpiece is determined by the at least one sensor 80. The position of the wire portion 210 within the workpiece, which can be used to determine the force of the wire on the workpiece, for example a vertical force or distribution of vertical forces, is determined by the sensor. Alternatively or additionally, the embodiments detect inclusions from within the workpiece, for example by detecting an asymmetric deformation of the portion of the wire 210 within the workpiece or by detecting the inclusion due to its contrasting elastic, such as acoustic impedance or discontinuity of acoustic impedance at the interface of the inclusion and the neighboring workpiece material, or other properties with respect to its surroundings or neighboring material, e.g. the rest of the workpiece.

In an embodiment, bow can be determined by determining the position of the wire portion within the workpiece with respect to one or more reference positions; a reference position being, for example, the horizontal 140 (as shown in Fig. 1); or in another example, two reference positions being the horizontal 140 and a plane of the at least one sensor 80.

An advantage of determining the position of the wire within the workpiece is that a truer measure of bow can be determined. A further advantage is that vertical force can be calculated with less error. Furthermore, an estimation of how the vertical force of the embedded wire is distributed within the workpiece can be obtained.

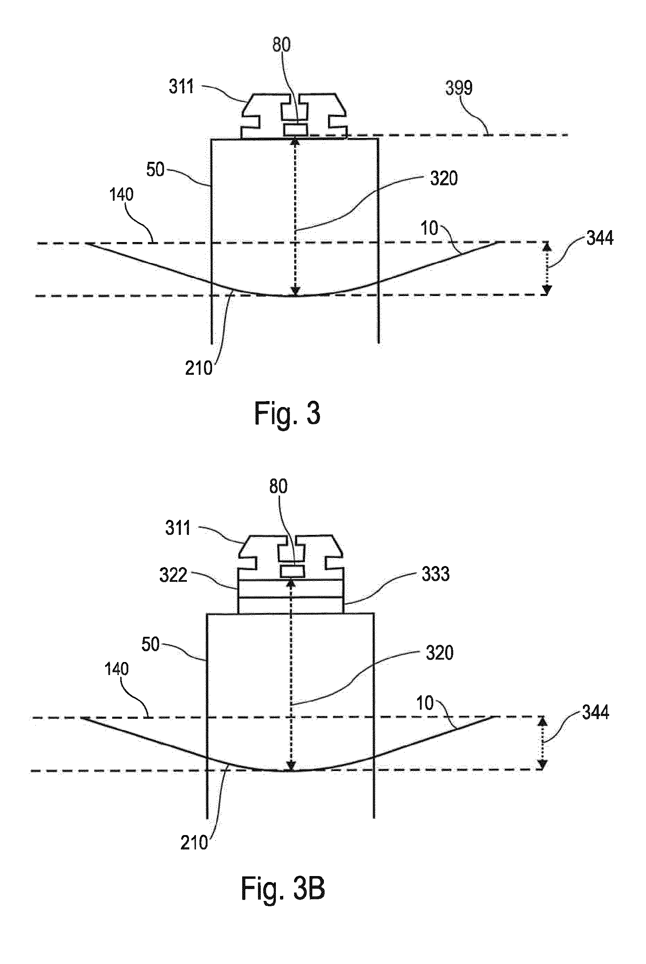

Fig. 3 shows a wire saw according to an embodiment. The geometry of Fig. 3 is such that, during cutting, either the workpiece 50 is moved down or the wire 10 is moved up, as apparent from the direction of deformation of the wire 10 from the horizontal 140; other geometries are envisaged and clearly possible to those of skill in the art. The at least one sensor 80, is located within a workpiece holder 311, for example a dove-tail steel holder. The position of the wire portion within the workpiece is determined by the at least one sensor.

In an embodiment, the sensor 80 determines the distance 320 (*d₁*) from the wire portion 210 within the workpiece to the plane of the sensor(s) 399. Many combinations of parameters, including possibly a single parameter, may be used to determine the bow 344 of the wire, or more particularly the bow of the wire within the workpiece. For example, the sensor 80 determines the distance 320 (*d₁*) from the wire portion 210 within the workpiece to the plane of the sensor(s); the distance of the horizontal 140 to the at least one sensor (*d₂*) is subtracted from *d₁* so that the bow 344 is determined (*Bow = d₁-d₂*)*.* The parameter *d₁* may be determined by the use of a separate position sensor for example on the wire guide or workpiece supply plate. The vertical force can be determined by using the relation *Fᵥ* = (*B*/*d*)×*4T.* The distance between wire guides, *d*, is known, and the wire tension is known through the use of a wire-tensioner in the wire saw. Algorithims to make computations of the bow and or vertical force may be performed, for example, by a computer or microprocessor.

In an embodiment of Fig. 3B, the workpiece 50 is mounted to the workpiece holder 311 through an optional beam 333 and an optional gluing plate 322. Alternatively or additionally, the workpiece may also be mounted using an intermediate epoxy glued interface and/or glass plate of approximately 1-50 mm, or approximately 10 mm, thickness.

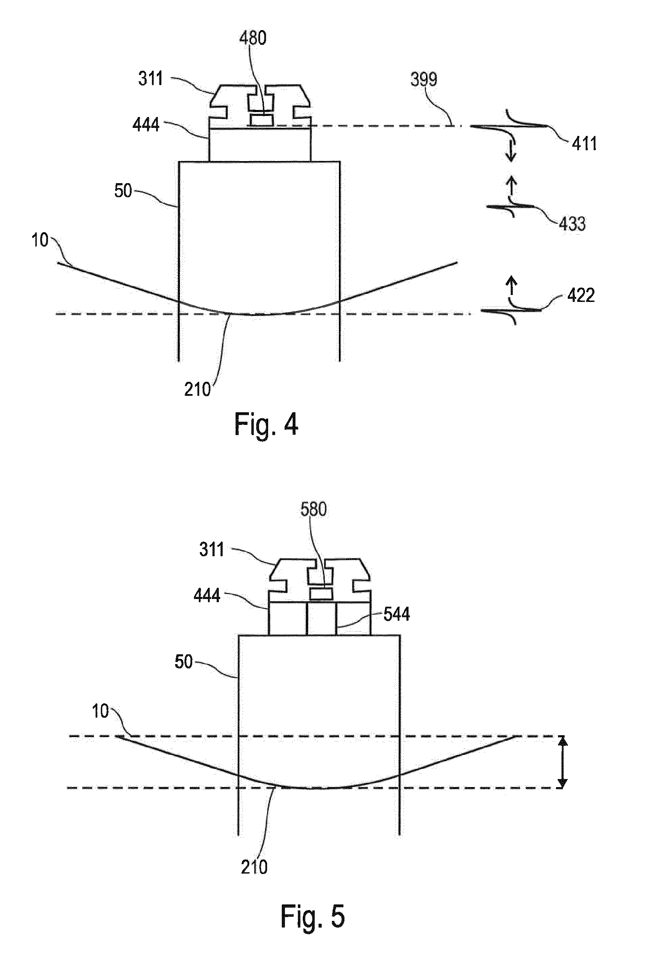

In an embodiment, as depicted in Fig. 4, the at least one sensor is an ultrasonic transducer 480, optionally located within the workpiece holder 311. The ultrasonic transducer 480 can be both a transmitter and receiver, or for example an array of transducers.

In an embodiment, an ultrasonic pulse (or wave) 411 is emitted by the transducer and travels through the workpiece 50. An echo 422 is generated upon reflection of the ultrasonic pulse at interfaces, in proportion to impedance contrast, such as at the interface made by the wire 10 within the workpiece 50. The transducer 480 detects the echo 422, 433 that travels back toward the ultrasonic transducer 480. The time duration between the emission of the pulse 411 and the detection of the echo 433 is measured in order to determine the position of the wire portion within the workpiece, based on the elastic properties of the materials, for example the acoustic impedances of the workpiece material and any intervening material. Intervening material may include material used in the holder-workpiece interface 444, and possibly part of the workpiece holder 311.

The echo 422, 433 is generated by reflection of the ultrasonic pulse or wave at an interface, such as the interface of the wire and the workpiece. The reflection intensity is in proportion to impedance contrast of the two materials that make the interface (e.g. silicon of the workpiece and steel of the wire). Knowing the elastic properties such as the acoustic impedance of the workpiece or workpiece material allows the distance to be determined based on the time duration, for example by a computer or microprocessor with memory in which is stored data for the elastic properties. The position of the wire portion within the workpiece is determined relative to at least one reference such as the plane defined by the sensors 399 or that and another reference such as the horizontal. Bow and vertical force can be determined by the position of the wire portion within the workpiece. The wire portion 210 within the workpiece is detected, leading to a determination of bow from the wire position within the workpiece. The bow can optionally be used to determine vertical force, and to adjust the table position, table speed, and/or cutting speed, in for example a feedback control loop for a wire saw that may depend on at least partially the bow and/or the vertical force.

The use of ultrasonic transducer(s) 480 may also enable the detection of inclusions that are embedded within the workpiece. The detection of inclusions within the workpiece can be used to adjust the table position, the table speed, and/or the cutting speed. The inclusion may be detected by the detection of an asymmetric bow of the wire portion 210 within the workpiece 50.

The holder-workpiece interface 444 between the workpiece holder 311 and the workpiece may comprise, optionally, a coupling material to reduce attenuation of ultrasonic waves at the interface. The coupling material may reduce impedance mismatch at the interface. Alternatively or additionally, the workpiece 50 may be mounted using an intermediate epoxy glued interface for example made of an approximately 1-20 mm thick, or about 10 mm thick, glass. Also, the holder-worpiece interface 444 may comprise a beam and a gluing plate.

According to some embodiments described herein, ultrasonic techniques are suggested to measure acoustic wave travel time (e.g., pulse-echo) or distance (e.g., acoustic interferometry) to the pseudo-interface created by the slicing wire web inside the workpiece.

As an alternative or in addition to the above-described pulse-echo measurement, or in addition, according to some embodiments, which can be combined with other embodiments described herein, an ultrasonic technique can be utilized that allows direct distance measurement. Thereby, an ultrasonic source generates and/or is configured to generate a sound wave pulse with known carrier frequency that is traveling through the materials and being reflected at interfaces. The multiple reflexions are interfering with each other modulating hence the received signal amplitude into an interferometric pattern alternating from maxima to minima. The distance between two consecutive maxima being equal to a integer multiple of half the wavelength, a precise distance measurement can be achieved knowing the carrier frequency, elastic properties of the media.

Alternatively, acoustic means, especially nondestructive ones, other than ultrasonic pulse-echo techniques may be implemented to provide a measure of the position of the wire within the workpiece, for example acoustic interferometry, or swept-frequency acoustic interferometry. Means of determining the position of the wire portion within the workpiece can be for example based on acoustic wave travel time (e.g. pulse-echo) or distance (e.g. acoustic interferometry) to the interface of the wire inside the workpiece. The position can be determined during cutting.

In Fig. 5 an embodiment, which may be combined with any other embodiment, is depicted in which the sensors comprise at least one IR sensor 580. For example, the IR sensor is an array of IR sensors. According to some embodiments, which can be combined with other embodiments described herein, micro infra-red temperature probes can be provided inside the ingot holder measuring the temperature profile of the workpieces, silicon bricks or ingots during slicing. The temperature measurements allow refining the acoustic method proposed above in two foreseen ways. According to some embodiments, which can be combined with other embodiments described herein, temperature-dependant elastic properties can be introduced, and/or - by tomography principle - the thermal profile of the brick at each instant can be reconstructed, i.e. the hottest point being likely the locus of kerf generation, i.e., where the wire is inside the silicon workpiece. In an embodiment, the IR sensor determines a temperature distribution in the workpiece, and the locus of heat may be determined, which then determines the cutting position, i.e. the position of the wire portion 210 within the workpiece. The temperature probes, or IR sensors, may be used in addition to ultrasonic sensors.

An advantage of combining IR sensors and ultrasonic sensors is that measuring temperature allows refinement of the position of the wire portion within the workpiece obtained ultrasonically by correcting for the temperature dependent elastic properties of the materials involved in the cutting process (materials such as for example of the workpiece, wire, and slurry). In an embodiment, the holder-workpiece interface 444 comprises at least one IR transparent channel 544 to accommodate transmission of IR radiation to the IR sensor. The IR transparent channel is made of, for example, silicon.

Alternatively or additionally, the thermal profile of the workpiece can be constructed by tomographic principles, with the hottest point being the likely locus of kerf generation, in other words, the position of the wire portion within the workpiece.

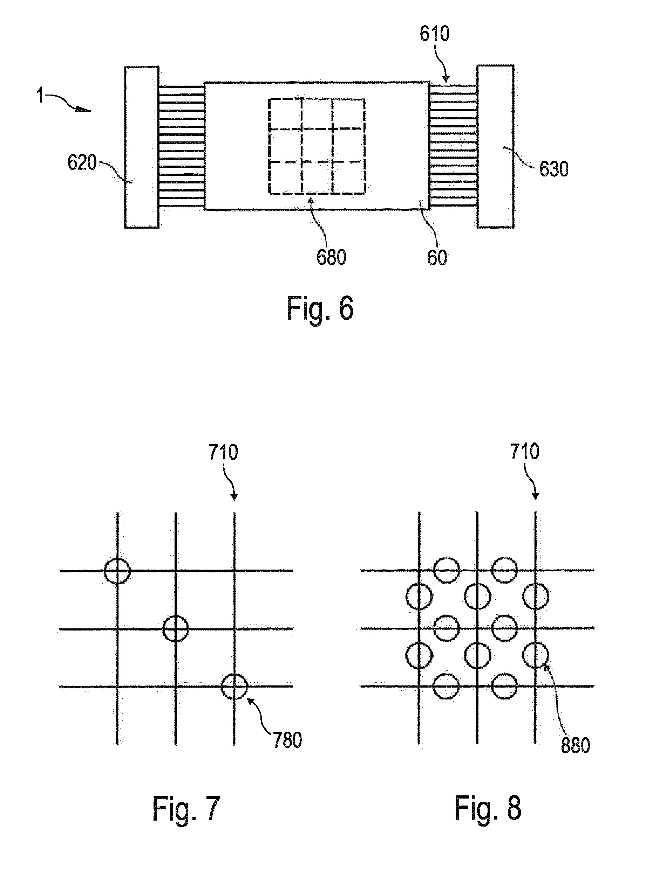

In an embodiment depicted in Fig. 6, the sensors are a two-dimensional array of sensors 680, although a one-dimensional array of sensors is also envisaged. The view of Fig. 6 is from beneath the supply plate 60. For example, the two-dimensional sensor array 680 is used in a waferer, although it can also be used in a squarer, cropper, or other kinds of wire-saws. The wafer has two wire guides 620, 630 that are grooved with approximately constant pitch, the grooves separating each wire segment from its neighbor. The wire segments 610 form a horizontal net of parallel wires, wire rows, or a wire web. The wire web is put into motion such that the wires move horizontally at 5-20 meters/second. A slurry may be used containing abrasive particles. As the workpiece is pushed against the horizontally moving wire web, e.g. during cutting, the sensors determine the position of portions of the wire segments 610 that are located within the workpiece(s).

The sensors allow in-situ real-time wire web bow measurement, and optionally the determination of the vertical force. Furthermore, feedback control of the table position, table speed, and/or cutting speed can be based on the bow(s), an average bow, the vertical force(s), an average vertical force, or combination thereof.

Fig. 7 depicts, according to embodiments described herein, the relative position of sensors 780 with respect to a wire web 710. Three sensors are depicted in Fig. 7, as a non-limiting example, that are located at vertices of a wire web.

Fig. 8 depicts, according to embodiments described herein, the sensors located between adjacent vertices, for example nearly midway between adjacent vertices. Each sensor may be located at a position to determine the bow of corresponding wire portions within different parts of the workpiece.

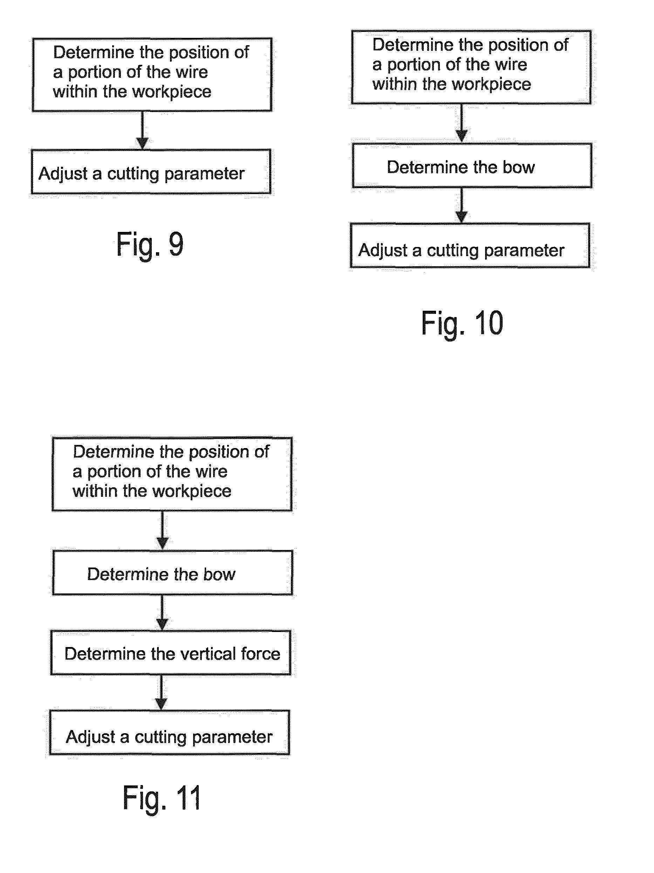

Fig. 9 depicts, according to an embodiment, a flowchart of a method to operate or control a wire saw, comprising determining the position of a portion of the wire within the workpiece, and adjusting a cutting parameter. A cutting parameter is for example, the table speed, the table position, or the like. Fig. 10 depicts a similar embodiment, with the added step of determining the bow before adjusting the cutting parameter, and Fig. 11 further adds the step of determining the vertical force before adjusting the cutting parameter. To determine the bow may comprise steps of determining the wire position within the workpiece with respect to one or more references, for example the horizontal or the horizontal and the plane of the sensors.

An advantage to determining the position of a portion of the wire within the workpiece is that a truer measure of bow can be determined, yielded a truer determination of vertical force. This leads to better operational control of the wire saw because, for example, the table speed can be optimized to maintain a nearly constant target vertical force with less error. Futhermore, inclusions may be detected which can allow the operation or control of the wire saw to be adjusted to minimize wire breakage and wear or to increase throughput.

While the foregoing is directed to embodiments of the invention, other and further embodiments of the invention may be devised without departing from the basic scope thereof, and the scope thereof is determined by the claims that follow.

## Claims

1. A wire saw (1) for sawing a workpiece (50) with a wire (10), the wire saw (1) comprising:
at least one sensor (80) configured to detect a position of a wire portion (210) within the workpiece (50) during sawing of the workpiece (50).

2. The wire saw (1) of claim 1, wherein
the at least one sensor (80) is at least one of an ultrasonic sensor and an infrared sensor.

3. The wire saw (1) of any preceding claim, wherein
the wire saw (1) is adapted to determine a bow based on the position of the wire portion (210) within the workpiece (50) with respect to at least one reference.

4. The wire saw (1) of any preceding claim, wherein
the wire saw (1) is adapted to determine a vertical force based at least partially on at least one of the bow or the position of the wire portion (210) within the workpiece.

5. The wire saw (1) of any preceding claim, wherein
the wire saw (1) is further adapted to adjust a table speed or a table position based at least partially on at least one of the position of the wire portion (210) within the workpiece, the vertical force, and the bow.

6. The wire saw (1) of any preceding claim, wherein
the wire saw (1) is a squarer or a waferer.

7. The wire saw (1) of any preceding claim, wherein
the at least one infrared sensor is configured to detect through silicon.

8. The wire saw (1) of any preceding claim, wherein
the at least one sensor (80) is configured to measure a temperature profile.

9. The wire saw (1) of any preceding claim, wherein
the at least one sensor (80) is located within the supply plate (60) or under the supply plate (60).

10. The wire saw (1) of any preceding claim, wherein
the at least one sensor (80) is located under the supply plate and opposite the position of the workpiece (50).

11. The wire saw (1) of any preceding claim, wherein
the wire saw is further configured to detect an additional position of an additional wire portion within the workpiece (50) during sawing of the workpiece (50).

12. A process of controlling a wire saw (1), comprising:
detecting a position of a wire portion (210) within a workpiece (50) during sawing of the workpiece.

13. The process of controlling a wire saw (1) of claim 12, wherein:
detecting is by at least one sensor (80).

14. The process of controlling a wire saw (1) of claim 12 or 13, further comprising:
adjusting a table speed or a table position based on at least partially the position of the wire portion (210) within the workpiece (50)

15. The process of controlling a wire saw (1) of claim 12 or 13, further comprising
adjusting a table speed or a table position based on at least partially the determination of a vertical force.
